# EUROPEAN PATENT SPECIFICATION

(11) **EP 1 189 685 B1**
(45) Date of publication and mention of the grant of the patent: **12.04.2006**
(21) Application number: 00932297.5
(22) Date of filing: 12.05.2000
(51) Int. Cl.: B01D 71/68, B01D 67/00

(54) **CHARGED MEMBRANE**
ELEKTRISCH GELADENE MEMBRAN
MEMBRANE CHARGEE

(30) Priority: 14.05.1999 US 134197 P
(43) Date of publication of application: 27.03.2002
(60) Divisional application: 06002101.1
(73) Proprietor: PALL CORPORATION, East Hills, NY 11548-1209 (US)
(72) Inventor: WU, Xiaosong, Pensacola, FL 32514 (US); KINSEY, Joe, L., Jr., Irvington, AL 36544-0934 (US); ISHEE, Michael, Pensacola, FL 32504 (US); KONSTANTIN, Peter, 37627 Heinade (DE); SHERTOK, Joel, Pace, FL 32571 (US); YANG, Yujing, Pensacola, FL 32514 (US)
(74) Representative: Wössner, Gottfried
(86) International application number: PCT/US2000/012894
(87) International publication number: WO 2000/069549

(56) References cited:
- WO-A-98/01208
- US-A- 5 269 931
- US-A- 5 462 867
- US-A- 5 543 054

## Description

### TECHNICAL FIELD OF THE INVENTION

The present invention generally relates to hydrophilic charged membranes. These membranes find use in the separation, removal, or reduction of bacterial contaminants such as endotoxins from water, saline solutions, and other Buids.

### BACKGROUND OF THE INVENTION

The removal of bacterial contaminants such as endotaxins from fluids, such as pharmaceutical products, has been a challenge to the separation industry. Attempts have been made to meet the challenge by using charge modified membranes.

The bacterial contaminant removal efficiency of some of these membranes is limited, e.g., the binding capacity for contaminants has been low. Thus, these membranes have reduced endotoxin retention characteristics. Such characteristics lead to early breakthrough of endotoxins into the filtered fluid. Further, some of the membranes have low water flow rates. Some of these membranes have limited water and/or saline wettability.

Accordingly, there exists a need for a membrane that has improved bacterial contaminant, particularly endotoxin, retention characteristics. There further exists a need for a membrane that has water and/or saline solution wettability and water permeability. The present invention provides for ameliorating at least some of the disadvantages of the prior art. These and other advantages of the present invention will be apparent from the description as set forth below.

WO 98/01208 discloses a cationically charge-modified membrane where the positive charge has been provided inter alia by the application of an epichlorohydrin-modified polyamine. The membranes are said to be useful in filtration of a broad variety of fluids, including endotoxin removal.

US-A-5,269,931 relates to a cationically charged semihydrophobic polyethersulfone membrane having hydrophilic and semihydrophobic properties. This type of membrane is recommended for various applications such as filtration of fluids and the macromolecular transfer of biomolecules either from electrophoresis gels or directly to immobilization on the membrane for hybridization and stripping.

US-A-5,543,054 relates to a method for covalently immobilising a carbohydrate molecule with an oppositely charged surface using a hydrophobic microporous polymer membrane coated with a crosslinked cationic polymer having fixed charges thereon.

US-A-5,462,867 discloses a hydrophobic polysulfone or polyethersulfone microporous membrane which is modified to contain a number of functionalized chain ends.

### BRIEF SUMMARY OF THE INVENTION

Many of the foregoing needs have been fulfilled by the present invention, which provides, in one embodiment, a hydrophilic charged membrane comprising a porous hydrophobic matrix and a negatively charged charge-providing agent distributed within the hydrophobic matrix. The present invention further provides a process for preparing the above membrane composing forming the membrane from a solution comprising a hydrophobic polymer capable of forming a porous hydrophobic matrix, a solvent for the hydrophobic polymer, a pore former, and a negatively charged charge- providing agent or a precursor thereof. The formation of the membrane can involve phase inversion.

The present invention further provides a filter device comprising the inventive hydrophilic charged membranes. The present invention further provides a process for treating a fluid containing bacterial contaminants, e.g., endotoxins, the process comprising placing the fluid in contact with a hydrophilic charged membrane and recovering a bacterial contaminant-depleted fluid. If desired, the bacterial contaminant-depleted fluid can be returned or administered to a patient. The term "bacterial contaminants" herein refers to endotoxin contaminants that result or originate from bacteria including lipopolysaccharides and lipoteichoic acid.

While the invention has been described and disclosed below in connection with certain embodiments and procedures, it is not intended to limit the invention to those specific embodiments. Rather it is intended to cover all such alternative embodiments and modifications as fall within the spirit and scope of the invention.

### BRIEF DESCRIPTION OF THE DRAWINGS

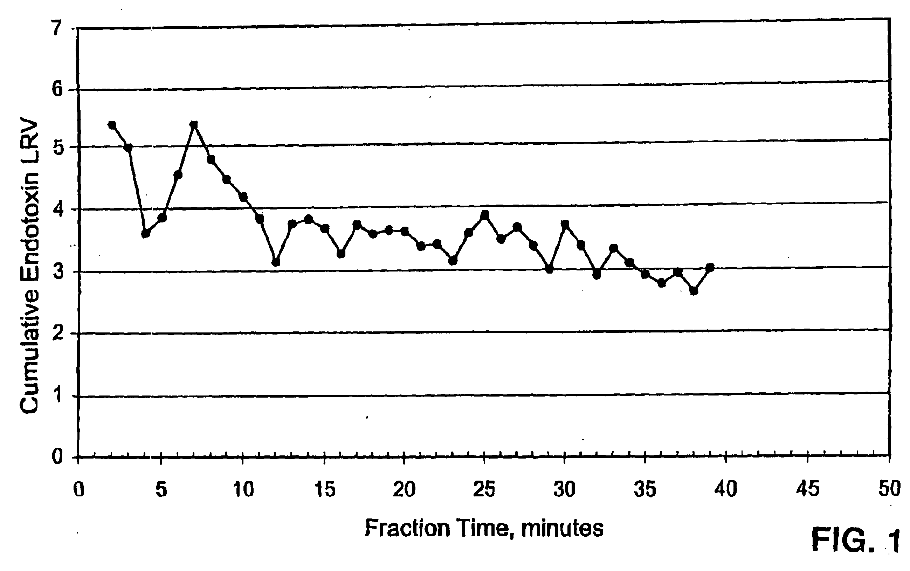

In Fig.1, the x-axis depicts the filtrate fraction collection time in minutes and the y-axis depicts the Log Reduction Value, which is defined as Log₁₀(endotoxin challenge concentration/endotoxin concentration in the faction).
Fig. 1 depicts the endotoxin redaction achieved when a saline solution containing an endotoxin challenge contamination was filtered using the membrane embodiment described in the Example.

### DETAILED DESCRIPTION OF THE INVENTION

The present invention is predicated on the discovery that a hydrophilic membrane having fixed charges and a hydrophobic component has excellent retention of bacterial contaminants, for example, endotoxins.

The present invention provides, in one embodiment, a hydrophilic charged microporous membrane comprising a porous hydrophobic subsftate and a coating comprising a negatively charged charge-providing agent. The charge-providing agent contains a suitable negatively charged group.

Preferably, the cbarge-providing agent is a polymer.

The polyamines used in the present invention are preferably water soluble or made water soluble by suitable chemical modifications, for example, by introducing hydrophilic groups such as hydroxyl.

As discussed above, the charge-providing agent is negatively charged. The charge-providing agent can be a negatively charged polymer. The negatively charged polymer can contain any suitable negative group, preferably a sulfonic acid group. For example, the negatively charged polymer comprises a polymerized acrylamidosulfonic acid monomer, preferably an acrylamidoalkyl sulfonic acid monomer. An example of such a monomer is 2-acrylamido-2-methyl-1-propanesulfonic acid ("AMPS").

It is further preferred the the negatively charged polymer is crosslinked. Although the crosslinking can be accomplished by any crosslinking agent, a preferred crosslinking agent is an acrylamido crosslinking agent. An example of an acrylamido crosslinking agent is N-(alkoxymethyl)acrylamide, preferably N-(isobutoxymethyl)acrylamide ("TBMA").

Optionally, the negatively charged polymer can include a polymerized hydroxyalkyl acrylate monomer, for example, a hydroxyethyl acrylate such as a hydroxyethyl alkylacrylate, e.g., 2-hydroxyethyl methacrylate. The term "alkyl" herein refers to lower alkyl groups, Particularly, C₁-C₁₀ alkyl, and more particularly, C₁-C₃, alkyl groups.

The porous hydrophobic substrate can be prepared by methods known to those of ordinary skill in the art. For example, it can be prepared by a phase inversion process. Thus, a casting solution containing the hydrophobic polymer, a solvent, a pore former, and optionally a small quantity of a non-solvent is prepared by combining and mixing the ingredients, preferably at an elevated temperature. The resulting solution is filtered to remove any insolubles or impurities. The casting solution is cast or extruded in the form of a sheet or hollow fiber. The resulting sheet or fiber is allowed to set or gel as a phase inverted membrane. The set membrane is then leached to remove the solvent and other soluble ingredients.

An embodiment of the hydrophilic charge modified membrane can be prepared as follows. The porous hydrophobic substrate is contacted with a composition comprising a charge providing agent or a precursor thereof. The contacting is carried out such that the charge-providing agent or precursor(s) thereof preferably coat the pore walls of the hydrophobic substrate. Thus, for example, the charge-providing agent or its precursor(s) can be dissolved in a suitable solvent that is compatible with the hydrophobic substrate to provide a solution that is subsequently placed in contact with the substrate.

Preferred solvents include water, low boiling alcohols such as methanol, ethanol, and isopropanol, and combinations thereof. Thus, for example, a mixture of water and ethanol is preferred. The solvent or the mixture of solvents is present in an amount of from about 80% to about 99% by weight, and preferably in an amount of from about 88% to about 97% by weight, of the coating composition.

To prepare a positively charged membrane, the polyamine or the mixture of polyamine precursors is typically present in an amount of from about 0.5% to about 20% by weight, and preferably in an amount of from about 1% to about 9% by weight, of the coating composition. In addition, the casting solution may contain a pH adjusting agent, e.g., to provide a pH level of from about 9.5 to about 11.5, and preferably from about 10.5 to about 11.0. The pH can be adjusted by the use of a base, e.g., an alkali such as potassium hydroxide.

The porous hydrophobic substrate can be coated with the coating solution by methods known to those of ordinary skill in the art, for example, by dip coating, spray

In another embodiment, the present invention provides a hydrophilic charged microporous membrane comprising a porous hydrophobic polymeric matrix and a negatively charged charge-providing agent distributed within the porous hydrophobic polymeric matrix. Without intending to be bound to any one theory or mechanism, it is believed that the charge-providing agent is distributed as a precipitate, occlusion, blend, and/or network within the hydrophobic matrix. Thus, for example, the hydrophilic charged membrane is composed of a porous hydrophobic polymer such as polyethersulfone having a charge-providing agent containing negatively charged groups dispersed therein. Such membranes can be produced by, e.g., co-casting, as illustrated below.

Any suitable hydrophobic polymer, solvent, and/or pore former can be used to prepare the hydrophobic matrix. Examples of hydrophobic polymers include polysulfones, polyolefins, polystyrenes, polyaromatics, cellulosics, polyesters, polyamides such as aromatic polyamides and aliphatic polyamides having long alkyl segments, e.g., C₈-C₁₆ segments, polyimides, polytetrafluoroethylene, polycarbonates, and PEEK. Aromatic polysulfones are preferred. Polyethersulfone is particularly preferred. N-methylpyrrolidone and N,N-dimethylformamide are preferred solvents. Polyethyleneglycol and glycerol are preferred pore formers.

The casting solution can be prepared by combining and mixing the required ingredients. It is preferred that the charge-providing agent is a polymer. The precursor of the polymeric charge providing agent includes one or more polymerizable monomers, an initiator, and, optionally, a crosslinking agent. Suitable monomers include acrylic monomers, e.g., acryloyl monomer, and more preferably, an alkyl substituted acryloyl or alkacryloyl monomer. It is further preferred that the monomer is an alkacryloylaminoalkyl monomer. The term "alkyl" herein refers to lower alkyl groups, particularly, C₁-C₁₀ alkyl, and more particularly, C₁-C₉ alkyl groups.

A combination of charged monomers and uncharged monomers can be employed. The uncharged monomer, when polymerized, is believed to provide advantageous charge separation and/or improved compatibility between the charge-providing agent and the hydrophobic matrix.

Preferably, the charge-providing polymer is crosslinked. Any suitable crosslinking agent known to those of ordinary skill in the art can be used. Preferably, a polyfunctional crosslinking agent such as a polyacrylate, e.g., di-, tri-, or higher acrylate, can be used. Alkyleneglycol polyacrylates, particularly, alkyleneglycol diacrylates are preferred. The term "alkylene" herein denotes a C₂-C₁₀ alkylene moiety of, and preferably, a C₂-C₄ moiety. Alkyleneglycol dialkylacrylates are further preferred. The term "alkyl" herein refers to lower alkyl groups, particularly, C₁-C₁₀ alkyl, and more particularly, C₁-C₃ alkyl groups. Alkyleneglycol dimethacrylates are further preferred. A suitable example of an alkyleneglycol dimethacrylate is ethyleneglycol dimethacrylate. Additional examples of alkyleneglycol dimethacrylates include di-, tri-, and higher ethyleneglycol dimethacrylates and polyethyleneglycol dimethacrylate. In addition to, or in place of, alkyleneglycol dimethacrylates, di-, tri-, and higher alkyleneglycol dialkyl acrylates such as diethyl, dipropyl and higher dialkylacrylates can be used.

Any suitable polymerization initiator can be used, preferably a free radical polymerization initiator. Ammonium persulfate is an example of a suitable free radical initiator.

The ingredients that make up the casting solution can be combined in any suitable proportion. Illustratively, the hydrophobic polymer can be present in an amount of from about 6% to about 22% by weight, and preferably from about 9% to about 15% by weight of the casting solution. The solvent can be present in an amount of from about 15% to about 30% by weight, and preferably from about 18% to about 30% by weight, of the casting solution. The pore former can be present in an amount of from about 50% to about 80% by weight, and preferably from about 60% to about 70% by weight, of the casting solution.

Typically, the charged monomer is present in an amount of from about 0.01% to about 15% by weight, and preferably from about 1.5% to about 2.5% by weight, of the casting solution prior to polymerization.

Illustratively, the crosslinking agent can be present in an amount of from about 0.001 % to about 2% by weight, and preferably from about 0.03% to about 1% by weight, of the casting solution prior to polymerization. By way of example, the initiator can be present in an amount of from about 0.01% to about 1% by weight, and preferably from about 0.05% to about 0.3% by weight, of the casting solution prior to polymerization.

The ingredients can be combined and mixed, preferably at an elevated temperature, in a suitable mixer. Thus, for example, the hydrophobic polymer can be added to the pore former in a suitable container equipped with a blender. The free radical initiator is dissolved in the solvent for the hydrophobic polymer and added to the container. The crosslinking agent and the precursor are then added. For example, the mixture is blended at a temperature of from about 90°F (32°C) to about 150°F (65°C) preferably from about 100°F (49°C) to about 140°F (60°C). The mixing can be carried out for a suitable length of time. Thus, for example, the mixture can be agitated at about 115°F (46°C) for about 8 hours. During the mixing, the precursor(s) undergo(es) polymerization. However, it is preferable not to advance the polymerization past the point where a precipitate or gel would form since precipitates and gels could adversely affect the casting operation or the quality of the resulting membrane. The resulting casting solution can be filtered to remove any insolubles, precipitates, gels, or impurities. The casting solution can be advantageously degassed to remove bubbles.

The casting solution can be shaped into any suitable form, e.g., a sheet, a tube, or a hollow fiber. Thus, for example, the casting solution can be shaped into a sheet by extruding through a slit or by spreading on a glass plate using a doctor blade. The casting solution can also be spread as a thin film on a porous fabric or paper.

The casting solution shaped as above provides a pre-membrane. The pre-membrane is then allowed to undergo phase inversion. Phase inversion can be caused, e.g., by exposing the pre-membme to a non-solvent liquid or vapor. Thus, for example, the pre-membrane can be exposed to water vapor in a controlled humidity chamber.

The resulting phase inverted membrane can be washed to remove the solvent, the pore former, and other washable ingredients. The phase-inverted membrane can be washed or leached in deionized water. The washed membrane is then dried to remove the water.

To prepare the hydrophilic membrane comprising a hydrophobic polymer matrix and a negative charge-providing agent distributed in the matrix, a negative charge-providing agent or a precursor thereof can be used. For example, a negatively charged monomer or a polymer can be included in the preparation of the membrane casting solution.

Thus, e.g., a mixture of AMPS and IBMA can be polymerized in a suitable solvent to obtain a copolymer solution as discussed in U.S. Patent 5,021,160, the disclosure of which is incorporated herein in its entirety by reference. This copolymer solution can be combined with the hydrophobic polymer, the casting solvent(s), the pore formers, the initiator, the crosslinking agent, and other ingredients as discussed above. The resulting mixture can be heated to obtain a casting solution. The negatively charged membrane can be prepared by casting the solution and causing phase inversion. The copolymer solution preferably contains a copolymer in an amount of from about 5% to about 20% by weigiit and more preferably in an amount of from about 10% to about 15% by weight of the solution. The copolymer can be used in an amount of from about 0.1% to about 1.5% by weight and more preferably in an amount of from about 0.3% to about 0.5% by weight of the casting solution.

The porous hydrophobic matrix can have any suitable pore size, for example, a pore size of about 10 µm or less, e.g., in the range of from about 0.1 µm to about 10 µm, preferably from about 0.1 µm to about 5 µm, and more preferably from about 0.2 µm to about 1 µm.

The present invention further provides a filter comprising the hydrophilic charged membranes of the present invention. The filter can be in any suitable form. For example, the filter can include a filter element made of the hydrophilic charged membrane sheet. In a preferred embodiment, the filter is disposed in a housing to provide a filter device.

The membranes of the present invention have excellent water permeability, endotoxin binding capacity, and, preferably, charge density.

The above membrane preferably has a high charge density. The charge density can be measured by any suitable method, e,g., by an electrolytic method such as measuring the potential drop across the membrane when it is placed between two electrolyte solutions of differing ionic strength; or, by a dye-binding method.

For negatively charged membranes, the binding capacity can be measured using a positively charged dye such as Methylene Blue.

The hydrophilic charged membrane comprising a negative charge-providing agent distributed within a hydrophobic matrix typically has a water flow rate of at least about 10 mL/minute/cm², e.g., from about 15 mL/minute/cm² to about 50 mL/minute/cm², and preferably from about 18 mL/minute/cm² to about 35 mL/minute/cm², at 10 psi (0.68 bar). The above membrane has an open water bubble point of from about 45 psi to about 70 psi (about 3.1 to about 4.8 bar), and preferably from about 50 psi to about 60 psi (about 3.5 to about 4.1 bar).

A 15% NaCl solution wets the above membrane in a period of from about 5 seconds to about 1 second, and preferably, instantly. The above membrane preferably has a high charge density. Illustratively, in some embodiments, the membrane has a Methylene Blue Dye binding capacity of 5 mL to about 50 mL, and preferably from about 10 mL to about 20 mL. The membrane has an endotoxin binding capacity of at least about 100,000 EU/cm², e.g., from about 100,000 EU/cm² to about 300,000 EU/cm² or greater, and preferably greater than 200,000 EU/cm² in 0.9% saline.

An advantage of a preferred embodiment of the present invention is that the components of the novel membranes are carefully chosen so that the membranes axe free or substantially flee of grafts or covalent links between the charge modifying agent and the hydrophobic substrate or matrix. The preparation of the hydrophilic charged membranes of the present invention involve chemistries and procedures that are relatively simple and/or easy to practice.

The properties of the membranes of the present invention make the membranes attractive for use in the removal of bacterial contaminants, particularly, lipopolysaccharides and/or lipoteichoic acids, from biological and pharmaceutical products. For example, bacterial contaminants can be removed from biological fluids, pharmaceutical products, buffers, salt solutions, dialysis solutions, and cell growth media, as well as from other biological preparations. A biological fluid includes any treated or untreated fluid associated with living organisms, particularly blood, including whole blood, warm or cold blood, and Stated or fresh blood; treated blood, such as blood diluted with at least one physiological solution, including but not limited to saline, nutrient, and/or anticoagulant solutions; blood components, such as platelet concentrate, platelet-rich plasma, platelet-poor plasma, platelet-free plasma, plasma, fresh frozen plasma, components obtained from plasma, packed red cells, transition zone material or buffy coat; analogous blood products derived from blood or a blood component or derived from bone marrow; red cells separated from plasma and resuspended in physiological fluid; and platelets separated from plasma and resuspended in physiological fluid. The biological fluid may have been treated to remove some of the leukocytes before being processed according to the invention. Sometimes, reference is made to a "unit" of a biological fluid. A "unit" is the quantity of biological fluid from a donor or derived from one unit of whole blood. It may also refer to the quantity drawn during a single donation. Typically, the volume of a unit varies, the amount differing from patient to patient and from donation to donation. Multiple units of some blood components, particularly platelets and buffy coat, may be pooled or combined, typically by combining four or more units.

As used herein, biological fluid refers to the components described above as well as to lymph fluids, and cerebrospinal fluid. Pharmaceutical products include compositions comprising proteins (e.g., antibodies, enzymes, vaccines), amino acids, peptides, nucleic acids, plasmids, cosmids, phages, polysaccharides, lipids, bioreactor, fermentor and/or cell culture harvests.

The membranes of the present invention are suitable for reducing endotoxin contamination from samples containing plasmids and endotoxins. Embodiments of the membrane can reduce endotoxims present in nucleic acid (e.g.,DNA) samples from over 1000 EU/mL of a fluid to less than 10 EU/mL (>2 logs). The endotoxin concentration can be reduced from over 52,000 EU/mg ofDNA to less than 500 EU/mg DNA. The DNA can be chromosomal or extra-chromosomal.

Thus, the present invention provides a process for treating a fluid containing bacterial contaminants to deplete the contaminants therefrom, the process comprising placing the fluid in contact with the hydrophilic charged membrane and recovering a bacterial contaminant-depleted fluid.

The contaminated fluid can be contacted with the membrane, for example, by passing the liquid through a filter containing the membrane of the present invention. Illustratively, the fluid is contacted with the membrane by passing the fluid under pressure over or through the membrane surface. Thus, the fluid can be passed through a filter, and the contaminant depleted filtrate (e.g., permeate) can be collected, further processed and/or administered or returned to a patient.

The present invention further provides a device, e.g., a filter device, chromatography device, macromolecular transfer device, flow distributor arrangement, and/or a membrane module comprising one or more inventive membranes of the present invention. In some embodiments of the invention, a set and/or system is provided, comprising a filter device including the inventive membrane, and at least one of a container, conduit, and vent. One embodiment of a system includes an additional filter device such as a leukocyte filter device.

The device can be in any suitable form. Typical filter devices comprise a housing including at least one inlet and at least one outlet defining a fluid flow path between the inlet and the outlet, and a membrane of the present invention disposed across the fluid flow path or tangentially to the fluid flow path. In some embodiments, e.g., wherein the filter device is suitable for processing fluid to be returned and/or administered to a patient, the device can include additional components such as, for example, at least one vent, e.g., at least one gas outlet and/or at least one gas inlet. Typically, the vent includes a porous medium that allows gas to pass therethrough while preventing the passage of bacteria therethrough.

Illustratively, the device can include a filter element comprising the inventive membrane in a substantially planar or pleated form In an embodiment, the element can have a hollow generally cylindrical form. If desired, the device can include the filter element in combination with upstream and/or downstream support or drainage layers. The device can include a plurality of membranes, e.g., to provide a multilayered filter element, or stacked to provide a membrane module, such as a membme module for use in membrane chromatography. For embodiments of the membrane which are in the form of a tube or fiber, bundles of tubes or fibers can be converted into modules by potting their ends by the use of an adhesive. Filter cartridges can be constructed by including a housing and endcaps to provide fluid seal as well as at least one inlet and at least one outlet.

The devices can be constructed to operate in crossflow or tangential flow mode as well as dead-end mode. Accordingly, the fluid to be treated can be passed, for example, tangentially to the membrane surface, or passed perpendicular to the membrane surface.

The following examples further illustrate the present invention, but of course, should not be construed as in any way limiting its scope.

### EXAMPLE

This Example illustrates another embodiment of a membrane suitable for treating fluids containing a bacterial contaminant. The ingredients and their quantities are set forth below.

| Ingredients | Wt.% |
|---|---|
| Polyethyleneglycol | 63.3 |
| Polyethersulfone | 13.0 |
| Glycerol | 1.0 |
| N,N-Dimethylformamide | 10.0 |
| N-methylpyrrolidone | 7.6 |
| Ammonium persulfate | 0.1 |
| Ethyleneglycol dimethacrylate | 1.0 |
| IBMA-AMPS copolymer solution (12% by weight) | 4.0 |

The IBMA-AMPS copolymer solution was prepared from AMPS and IBMA as described in Example 1 of U.S. Patent 5,021,160.

The ingredients set forth in the table above were combined and mixed at 130°F (54.4°C) for 18 hours. The resulting solution was degassed and cast onto a supporting surface, and phase inversion was carried out by exposure to water vapor. The resulting membrane was washed with deionized water and dried. The membrane had an open water bubble point of 53.9 psi; a water flow rate of 18.8 mL/minute/cm² at 10 psi (0.68 bar); a thickness of about 5.5-5.9 mils (137-148 µm); and a Methylene Blue Dye binding capacity of 16mL, 10 ppm solution at pH 6.6, at a ΔP of 10 psi (0.69 bar). A 15% NaCl solution wet the membrane instantly. The membrane had a nominal pore size of 0.2 µm.

The membrane was tested for endotoxin removal from 0.9% saline as described in Example 2. The target endotoxin challenge concentration was 10,000 EU/mL. The actual endotoxin challenge level was 24,560 EU/mL. The fluid flow rate was 1 ml/min. The detection limit was 0.05 EU/mL or an LRV of 5.7. The results obtained are depicted in Fig. 1. The membrane had an endotoxin binding capacity of greater than 265, 513 EU/cm² in saline.

## Claims

1. A hydrophilic charged microporous membrane comprising a porous hydrophobic polyethersulfone matrix and a negatively charged charge-providing agent distributed within said porous hydrophobic polyethersulfone matrix, the charge-providing agent comprising a negatively charged polymer comprising a polymerized acrylamido sulfonic acid monomer and a polyacrylate.

2. The hydrophilic charged microporous membrane of claim 1, wherein said polyacrylate comprises ethyleneglycol dimethacrylate.

3. The hydrophilic charged microporous membrane of claim 1 or 2, wherein said porous hydrophobic matrix is substantially free of a wetting agent.

4. The hydrophilic charged microporous membrane of any one of claims 1-3 wherein said membrane is wettable by a saline solution.

5. The hydrophilic charged microporous membrane of any one of claims 1-4, which has an endotoxin binding capacity of at least about 100,000 EU/cm².

6. A process for preparing a hydrophilic charged microporous membrane comprising a porous hydrophobic matrix and a negatively charged charge-providing agent distributed within said hydrophobic matrix, the process comprising forming a casting solution comprising a polymer capable of forming said porous hydrophobic matrix, a solvent for said polymer, a pore former, and said charge-providing agent or a precursor of said charge-providing agent, wherein said precursor comprises a free radical polymerizable monomer, a crosslinking agent, and a free radical initiator.

7. The process of claim 6 further including causing phase-inversion to obtain a phase-inverted membrane.

8. The process of claim 6 or 7, further including leaching of the phase-inverted membrane.

9. The process of any one of claims 6-8, wherein said free radical polymerizable monomer is negatively charged.

10. The process of any one of claims 6-8, wherein said negatively charged free radical polymerizable monomer contains a sulfonic acid group.

11. The process of any one of claims 6-8, wherein said crosslinking agent is a polyacrylate.

12. The process of claim 11, wherein said polyacrylate is a diacrylate.

13. The process of claim 12, wherein said diacrylate is an alkyleneglycol diacrylate.

14. The process of any one of claims 6-13, wherein said polymer of said matrix is selected from the group consisting of polyaromatics, polysulfones, polyolefins, polystyrenes, polyamides, polyimides, fluoropolymers, polycarbonates, polyesters, and cellulose acetates.

15. The hydrophilic charged microporous membrane produced by the process of any one of claims 6-14.

16. A filter device comprising the membrane of any one of claims 1-5 and 15 disposed in a housing.

17. A process for treating a fluid containing bacterial contaminants, said process comprising placing said fluid in contact with the hydrophilic charged microporous membrane of any one of claims 1-5 and 15, and recovering a bacterial contaminant depleted fluid.

18. A process for treating water containing bacterial contaminants comprising lipotechoic acid, said process comprising placing said water in contact with the hydrophilic charged microporous membrane of any one of claims 1-5 and 15, and recovering bacterial contaminant depleted water.

19. A process for treating a saline solution containing bacterial contaminants, said process comprising placing said saline solution in contact with the hydrophilic charged microporous membrane of any one of claims 1-5 and 15, and recovering a bacterial contaminant depleted saline solution.

20. The process of claim 19, wherein said fluid has a surface tension of from about 72 to about 78 dynes/cm.

21. The process of claim 17, wherein said fluid is a pharmaceutical product.

22. The process of claim 18, wherein said bacterial contaminant includes endotoxin and wherein endotoxin depleted water is recovered.

23. The process of claim 17 or 19, wherein said bacterial contaminant comprises an endotoxin.

## Patentansprüche

1. Hydrophile geladene mikroporöse Membran, umfassend eine poröse hydrophobe Polyethersulfon-Matrix und ein negativ geladenes, Ladung stellendes Agens, welches in der porösen hydrophoben Polyethersulfon-Matrix verteilt ist, wobei das Ladung stellende Agens ein negativ geladenes Polymer umfasst, welches ein polymerisiertes Acrylamidsulfonsäure-Monomer und ein Polyacrylat umfasst.

2. Hydrophile geladene mikroporöse Membran nach Anspruch 1, wobei das Polyacrylat Ethylenglycoldimethacrylat umfasst.

3. Hydrophile geladene mikroporöse Membran nach Anspruch 1 oder 2, wobei die poröse hydrophobe Matrix im Wesentlichen frei von einem Benetzungsmittel ist.

4. Hydrophile geladene mikroporöse Membran nach einem der Ansprüche 1 bis 3, wobei die Membran durch eine Kochsalzlösung benetzbar ist.

5. Hydrophile geladene mikroporöse Membran nach einem der Ansprüche 1 bis 4, welche eine Endotoxin-Bindungskapazität von mindestens ca. 100 000 EU/cm² aufweist.

6. Verfahren zur Herstellung einer hydrophilen geladenen mikroporösen Membran umfassend eine poröse hydrophobe Matrix und ein negativ geladenes, Ladung stellendes Agens, welches in der hydrophoben Matrix verteilt ist, wobei das Verfahren umfasst: Bildung einer Gießlösung, welche ein zur Bildung der porösen hydrophoben Matrix befähigtes Polymer, ein Lösemittel für das Polymer, einen Porenbildner und das Ladung stellende Agens oder einen Vorläufer des Ladung stellenden Agens umfasst, wobei der Vorläufer ein radikalisch polymerisierbares Monomer, ein Vernetzungsmittel und einen Radikalinitiator umfasst.

7. Verfahren nach Anspruch 6, ferner umfassend das Verursachen von Phaseninversion, um eine phaseninvertierte Membran zu erhalten.

8. Verfahren nach Anspruch 6 oder 7, ferner umfassend Leaching der phaseninvertierten Membran.

9. Verfahren nach einem der Ansprüche 6 bis 8, wobei das radikalisch polymerisierbare Monomer negativ geladen ist.

10. Verfahren nach einem der Ansprüche 6 bis 8, wobei das negativ geladene radikalisch polymerisierbare Monomer eine Sulfonsäure-Gruppe enthält.

11. Verfahren nach einem der Ansprüche 6 bis 8, wobei das Vernetzungsmittel ein Polyacrylat ist.

12. Verfahren nach Anspruch 11, wobei das Polyacrylat ein Diacrylat ist:

13. Verfahren nach Anspruch 12, wobei das Diacrylat ein Alkylenglycoldiacrylat ist.

14. Verfahren nach einem der Ansprüche 6 bis 13, wobei das Polymer der Matrix aus der Gruppe ausgewählt ist, die aus Polyaromaten, Polysulfonen, Polyolefinen, Polystyrolen, Polyamiden, Polyimiden, Fluorpolymeren, Polycarbonaten, Polyestern und Celluloseacetaten besteht.

15. Hydrophile geladene mikroporöse Membran, hergestellt durch das Verfahren nach einem der Ansprüche 6 bis 14.

16. Filtervorrichtung, umfassend die Membran nach einem der Ansprüche 1 bis 5 und 15, angeordnet in einem Gehäuse.

17. Verfahren zum Behandeln eines Fluids, welches bakterielle Verunreinigungen enthält, wobei das Verfahren umfasst: Inkontaktbringen des Fluids mit der hydrophilen geladenen mikroporösen Membran nach einem der Ansprüche 1 bis 5 und 15 und Wiedergewinnen eines an bakteriellen Verunreinigungen verarmten Fluids.

18. Verfahren zum Behandeln von Wasser, welches bakterielle Verunreinigungen enthält, die Lipoteichonsäure umfassen, wobei das Verfahren umfasst: Inkontaktbringen des Wassers mit der hydrophilen geladenen mikroporösen Membran nach einem der Ansprüche 1 bis 5 und 15 und Wiedergewinnen eines an bakteriellen Verunreinigungen verarmten Wassers.

19. Verfahren zum Behandeln einer Kochsalzlösung, welche bakterielle Verunreinigungen enthält, wobei das Verfahren umfasst: Inkontaktbringen der Kochsalzlösung mit der hydrophilen geladenen mikroporösen Membran nach einem der Ansprüche 1 bis 5 und 15 und Wiedergewinnen einer an bakteriellen Verunreinigungen verarmten Kochsalzlösung.

20. Verfahren nach Anspruch 19, wobei das Fluid eine Oberflächenspannung von ca. 72 bis ca. 78 dyn/cm aufweist.

21. Verfahren nach Anspruch 17, wobei das Fluid ein pharmazeutisches Produkt ist.

22. Verfahren nach Anspruch 18, wobei die bakterielle Verunreinigung ein Endotoxin umfasst und wobei ein an Endotoxinen verarmtes Wasser wiedergewonnen wird.

23. Verfahren nach Anspruch 17 oder 19, wobei die bakterielle Verunreinigung ein Endotoxin umfasst.

## Revendications

1. Membrane microporeuse hydrophile chargée comprenant une matrice hydrophobe poreuse de polyéthersulfone et un agent apportant des charges, chargé négativement, distribué dans ladite matrice hydrophobe poreuse de polyéthersulfone, l'agent apportant des charges comprenant un polymère chargé négativement comprenant un monomère d'acide acrylamidosulfonique polymérisé et un polyacrylate.

2. Membrane microporeuse hydrophile chargée selon la revendication 1, dans laquelle ledit polyacrylate comprend du diméthacrylate d'éthylèneglycol.

3. Membrane microporeuse hydrophile chargée selon la revendication 1 ou 2, dans laquelle ladite matrice hydrophobe poreuse est substantiellement exempte d'agent mouillant.

4. Membrane microporeuse hydrophile chargée selon l'une quelconque des revendications 1 à 3, dans laquelle ladite membrane peut être mouillée par une solution saline.

5. Membrane microporeuse hydrophile chargée selon l'une quelconque des revendications 1 à 4, qui a une capacité de liaison à des endotoxines d'au moins environ 100 000 UE/cm².

6. Procédé pour la préparation d'une membrane microporeuse hydrophile chargée comprenant une matrice hydrophobe poreuse et un agent apportant des charges, chargé négativement, distribué dans ladite matrice hydrophobe, le procédé comprenant la formation d'une solution à couler comprenant un polymère capable de former ladite matrice hydrophobe poreuse, un solvant pour ledit polymère, un agent formant des pores et ledit agent apportant des charges ou un précurseur dudit agent apportant des charges, où ledit précurseur comprend un monomère polymérisable avec des radicaux libres, un agent réticulant et un initiateur de radicaux libres.

7. Procédé selon la revendication 6, incluant en outre la production d'une inversion de phase pour obtenir une membrane à inversion de phase.

8. Procédé selon la revendication 6 ou 7, incluant en outre le lessivage de la membrane à inversion de phase.

9. Procédé selon l'une quelconque des revendications 6 à 8, où ledit monomère polymérisable avec des radicaux libres est chargé négativement.

10. Procédé selon l'une quelconque des revendications 6 à 8, où ledit monomère polymérisable avec des radicaux libres chargé négativement contient un groupe acide sulfonique.

11. Procédé selon l'une quelconque des revendications 6 à 8, où ledit agent réticulant est un polyacrylate.

12. Procédé selon la revendication 11, où ledit polyacrylate est un diacrylate.

13. Procédé selon la revendication 12, où ledit diacrylate est un diméthacrylate d'éthylèneglycol.

14. Procédé selon l'une quelconque des revendications 6 à 13, où ledit polymère de ladite matrice est choisi dans le groupe constitué par les polyaromatiques, les polysulfones, les polyoléfines, les polystyrènes, les polyamides, les polyimides, les fluoropolymères, les polycarbonates, les polyesters et les acétates de cellulose.

15. Membrane microporeuse hydrophile chargée produite par le procédé selon l'une quelconque des revendications 6 à 14.

16. Dispositif de filtre comprenant la membrane selon l'une quelconque des revendications 1 à 5 et 15 disposée dans un boîtier.

17. Procédé pour le traitement d'un fluide contenant des contaminants bactériens, ledit procédé comprenant la mise dudit fluide en contact avec la membrane microporeuse hydrophile chargée selon l'une quelconque des revendications 1 à 5 et 15 et la récupération d'un fluide débarrassé du contaminant bactérien.

18. Procédé pour le traitement d'une eau contenant des contaminants bactériens comprenant de l'acide lipotéchoïque, ledit procédé comprenant la mise de ladite eau en contact avec la membrane microporeuse hydrophile chargée selon l'une quelconque des revendications 1 à 5 et 15 et la récupération d'eau débarrassée du contaminant bactérien.

19. Procédé pour le traitement d'une solution saline contenant des contaminants bactériens, ledit procédé comprenant la mise de ladite solution saline en contact avec la membrane microporeuse hydrophile chargée selon l'une quelconque des revendications 1 à 5 et 15 et la récupération d'une solution saline débarrassée du contaminant bactérien.

20. Procédé selon la revendication 19, où ledit fluide a une tension superficielle d'environ 72 à environ 78 dynes/cm.

21. Procédé selon la revendication 17, où ledit fluide est un produit pharmaceutique.

22. Procédé selon la revendication 18, où ledit contaminant bactérien inclut une endotoxine et où l'on récupère de l'eau débarrassée de l'endotoxine.

23. Procédé selon la revendication 17 ou 19, où ledit contaminant bactérien comprend une endotoxine.
